# EUROPÄISCHE PATENTANMELDUNG

(11) **EP 0 610 524 A1**
(43) Veröffentlichungstag der Anmeldung: **17.08.1994**
(21) Anmeldenummer: 93101966.5
(22) Anmeldetag: 09.02.1993
(51) Int. Cl.: H02K 1/12

(54) **Elektromotor mit schraubenlosem Rahmenaufbau**

(71) Anmelder: Licentia Patent-Verwaltungs-GmbH, D-60596 Frankfurt (DE)
(72) Erfinder: Appeldorn, Alfred, Dipl.-Ing., W-2904 Hatten (DE); Baumann, Günther, W-2900 Oldenburg (DE); Wolf, Werner, W-2900 Oldenburg (DE)
(74) Vertreter: Vogl, Leo, Dipl.-Ing.

(57) **Zusammenfassung**

Die Erfindung betrifft einen Elektromotor mit schraubenlosem Rahmenaufbau mit einem Stator (3), einem Rotor und zwei zur Führung des Rotors dienenden Lagerschilden (9), welche durch Tragelemente (11, 13) unter Zugspannung zusammengehalten werden. Eine einfache und sichere Montage und Demontage des Stators (3) mit den Tragelementen (11, 13) und der Lagerschilde (9) einschließlich des Rotors wird dadurch ermöglicht, daß die als Abstandsprofile dienenden Tragelemente (11, 13) an ihren freien Enden Haltezungen (83, 85) mit Rastnasen aufweisen, welche durch Schlitze in den Lagerschilden (9) durchsteck- und mittels der Rastnasen an den Außenseiten (103) der Lagerschilde (9) unter Zugspannung verrast- und verriegelbar sind.

## Beschreibung

Die Erfindung betrifft einen Elektromotor mit schraubenlosem Rahmenaufbau der im Oberbegriff des Patentanspruchs 1 angegebenen Art.

Durch die DE-OS 16 38 315 ist ein elektrischer Kleinmotor mit Rahmenkonstruktion bekannt, der in hintergriffige Aussparungen eines Ständerblechpaketes außen befestigte Rahmenbügel aufweist. Diese Rahmenbügel sind an ihren Enden mit senkrecht zur Rotorachse verlaufenden Abwinkelungen versehen, welche mittels Schraubenverbindungen mit Lagerträgern für die Rotorwelle lösbar verbunden sind.

Auch wird durch die DE-AS 12 01 907 ein Elektromotor offenbart, dessen Statorblechpaket an der Außenseite zwei Tragelemente von langgestreckter Form aufweist. Diese Tragelemente liegen parallel zur Rotorachse und sind an U-förmigen Lagerträgern mittels Schraubenverbindungen lösbar befestigt.

Weiterhin ist in der DE-OS 23 42 546 ein Elektromotor mit schraubenlosem Gehäuseaufbau beschrieben, dessen Lagerschilde in axialer Richtung schwalbenschwanzartige Taschen zur Aufnahme von gewölbten Metallstreifen aufweisen. Durch Zusammendrücken dieser Metallstreifen in den Taschen werden die beiden Lagerschilde kraftschlüssig miteinander verbunden. Diese Verbindung läßt sich zum Austauschen von Einzelteilen des Motors nicht ohne weiteres wieder lösen.

Schließlich ist durch das deutsche Gebrauchsmuster 74 42 915 ein Gehäuse für einen Elektromotor bekannt, dessen Gehäuseteile durch verschränkbare Haltezungen miteinander verbindbar sind. Für ein wiederholbares Lösen der Gehäuseteile ist diese Konstruktion weniger geeignet.

Der Erfindung liegt die Aufgabe zugrunde, einen Elektromotor mit schraubenlosem Rahmenaufbau zu schaffen, dessen das Statorblechpaket tragende Tragelemente mit den Lagerschilden für den Rotor mittels einfachster Verbindungsmittel lösbar verbunden sind. Diese Aufgabe wird durch die im Patentanspruch 1 gekennzeichneten Merkmale gelöst.

Die erfindungsgemäßen Tragelemente weisen an ihren Enden angeformte Verbindungsmittel auf, durch welche die Lagerschilde auf einfachste Weise unter Zugspannung zusammengehalten werden. Durch eine weitere Ausgestaltung des Erfindungsgegenstandes sind die Tragelemente gleichzeitig mit Sicherungselementen versehen, durch welche die Lagen der Verbindungselemente sicher arretierbar sind.

Weitere vorteilhafte Ausgestaltungen des Erfindungsgegenstandes sind den weiteren Unteransprüchen zu entnehmen.

Die Erfindung wird anhand eine Ausführungsbeispiels im folgenden näher beschrieben. Es zeigen:
- Figur 1: einen Elektromotor in Seitenansicht,
- Figur 2: Tragelemente mit dem Statorblechpaket,
- Figur 3: eine Einzelheit aus den Figuren 1 und 2,
- Figur 4: das Statorblechpaket in Draufsicht,
- Figur 5: ein Lagerschild in Draufsicht,
- Figur 6: ein Tragelement nach dem Ausschneiden aus einem Blechstück,
- Figur 7: ein Ende des Tragelementes in vergrößerter Darstellung,
- Figur 8: eine Einzelheit aus Figur 6 in Seitenansicht und
- Figur 9: eine Einzelheit aus Figur 8.

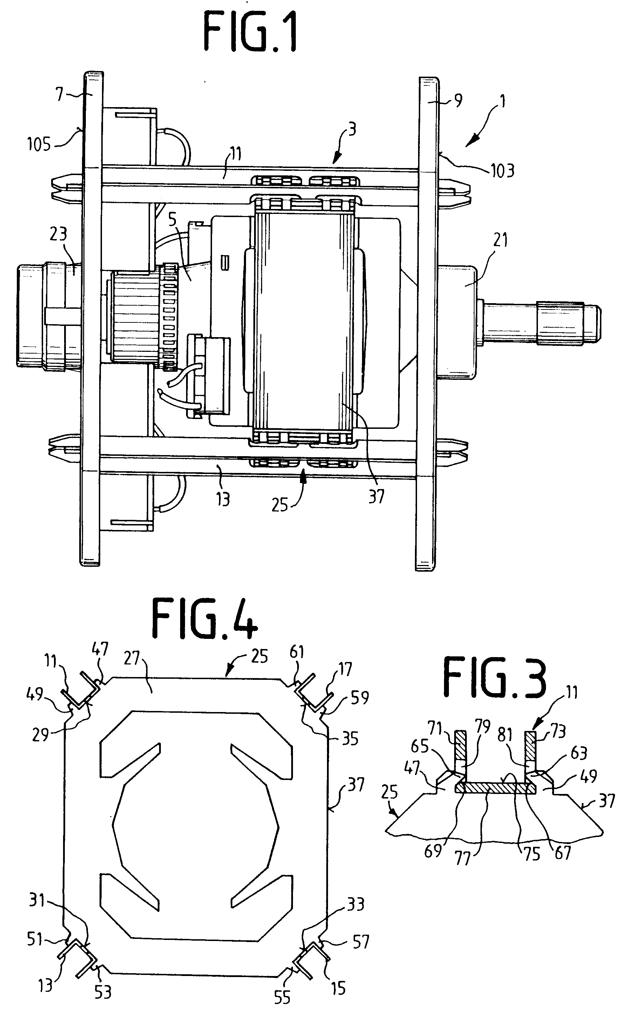

Die Figur 1 zeigt einen Elektromotor 1 der aus einem Stator 3, einem darin umlaufenden Rotor 5 und zwei zur Führung des Rotors 5 dienenden metallischen Lagerschilden 7, 9 besteht. Diese Lagerschilde 7, 9 werden mittel sie axial miteinander verbindender metallischer Tragelemente 11, 13, 15, 17 zusammengehalten. Der Rotor 5 besitzt eine Welle 19, die in Lagern 21, 23 der Lagerschilde 7, 9 zur Drehung gelagert ist. Das Statorblechpaket 25 wird durch eine Vielzahl von Lamellenblechen 27 gebildet, die einander identisch und so ausgefluchtet sind, daß sie axial erstreckende Nuten 29, 31, 33, 35 für nicht dargestellte Wicklungen des Elektromotors 1 ergeben. Die Lamellenbleche 27 des Statorblechpaketes 25 werden mittels Schweißnähte oder sonstiger Verbindungsmittel zusammengehalten.

Weiterhin weist die Außenumfangsfäche 37 des Statorblechpaketes 25 in Motorachsrichtung durchgehend verlaufende Aufnahmenuten 39, 41, 43, 45 zur formschlüssigen Lagerung der U-förmig ausgebildeten Tragelemente 11, 31, 15, 17 auf. Die Aufnahmenuten 29, 31, 33, 35 sind zwischen gegenüber der Außenumfangsfläche 37 des Statorblechpaketes 25 vorstehend ausgebildete und paarweise einander gegenüberliegende Anschlagnasen 47, 49, 51, 53, 55, 57, 59, 61 angeordnet. Zum festen Verbinden der einzelnen Tragelemente 11, 13, 15, 17 werden die Nasenspitzen 63, 65 der Anschlagnasen 47, 49 von einigen Lamellenblechen 27 hinter Anschlagkanten in den Tragelementen verstemmt, was in der Figur 3 an einem Beispiel mit dem Tragelement 11 vergrößert dargestellt ist. Die anderen Tragelemente 13, 15, 17 haben alle den gleichen Aufbau. Die Seitenschenkel 71, 73 des U-förmigen Tragelementes 11 weisen an der Oberkante 75 der Bodenfläche 77 ausgehende Ausnehmungen 79, 81 auf, durch welche die Nasenspitzen 63, 65 der Anschlagnasen 47, 49 hinter den als Anschlagkanten dienenden, oberen freien Seitenkanten 67, 69 der Bodenfläche 77 verstemmbar sind. Zum Befestigen des Blechpaketes 25 sind die Nasenspitzen der Anschlagnasen von mehreren Lamellenblechen 27 zu verstemmen, wonach dann die Verbindung der Tragelemente 11, 13, 15, 17 mit den Lagerschilden 7, 9 wie im folgenden beschrieben zu erfolgen hat.

Die als Abstandsprofile dienenden Tragelemente 11, 13, 15, 17 weisen an ihren freien Enden Haltezungen 83, 85 mit Rastnasen 87, 89, 91, 93 auf, welche durch Schlitze 95, 97, 99, 101 in den Lagerschilden 7, 9 durchsteck- und mittels der Rastnasen 87, 89, 91, 93 an den Außenflächen 103, 105 der Lagerschilde 7, 9 unter Zugspannung verrastbar sind. Die Schlitze 95, 97, 99, 101 in den beiden Lagerschilden 7, 9 sind gleich ausgebildet.

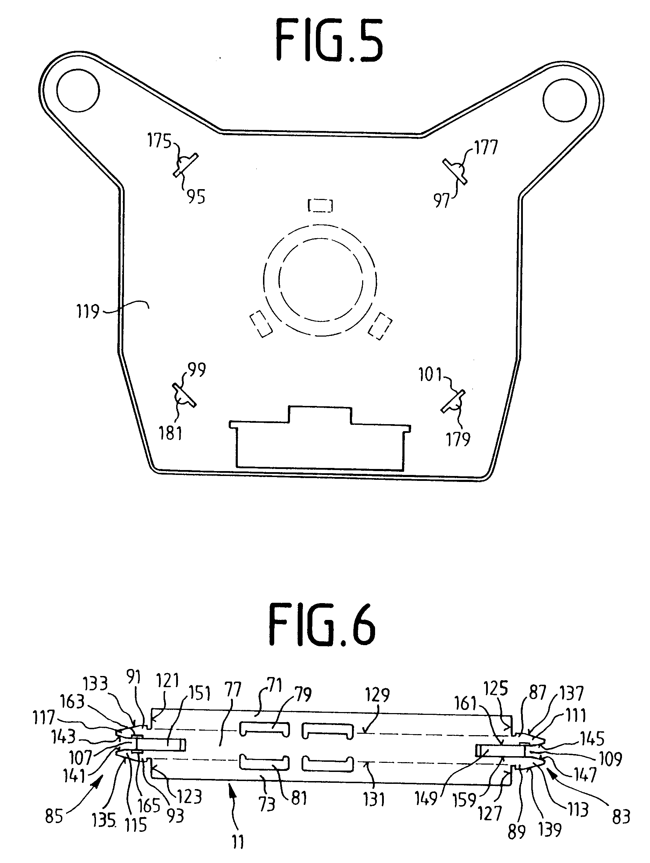

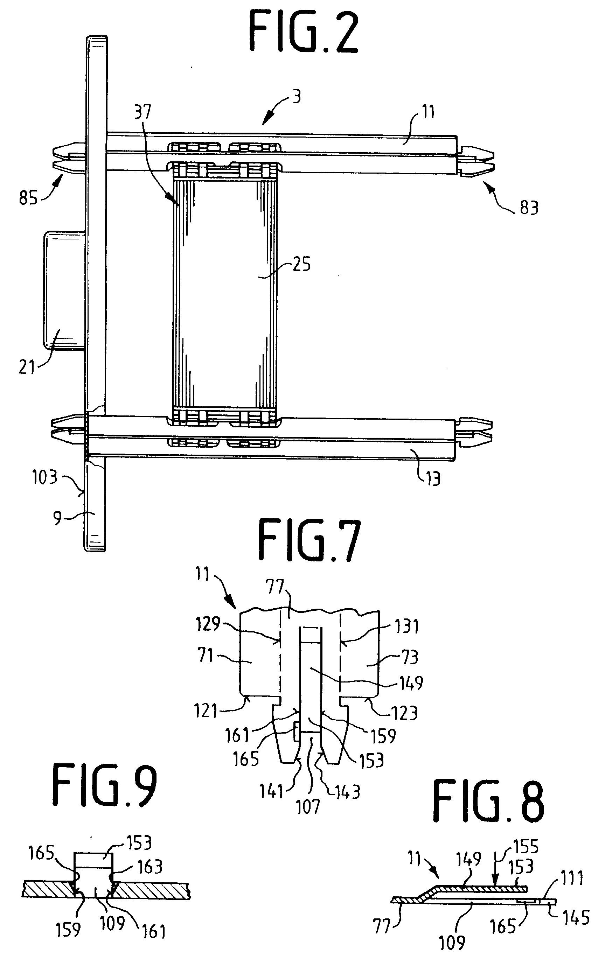

Die Haltezungen 83, 85 weisen gemäß den Figuren 6 und 7 mittig von ihren freien Enden ausgehende und bis in die Bodenfläche 77 der Tragelemente 11 reichende Aussparungen 107, 109 auf, durch welche die beiden Zungenhälften 111, 113, 115, 117 beim Durchstecken durch die rechteckförmig ausgebildeten Schlitze 95, 97, 99, 101 in den Lagerschilden 7, 9 zur Achse des Tragelementes 11 hin plastisch verform- und nach dem Durchstecken mittels eines Werkzeuges z. B. eines Schraubendrehers zum Verrasten der Rastnasen 87, 89, 91, 93 der Haltezugen 83, 85 hinter den Seitenkanten der Schlitze 95, 97, 99, 101 zurückverformbar sind. Hiernach drücken die Rastnasen 87, 89, 91, 93 die Lagerschilde 7, 9 mit ihren Innenflächen 119 gegen die freien Enden 121, 123, 125, 127 der Seitenschenkel 73, 75 an dem U-förmig gebogenen Tragelement 11 unter Vorspannung an. Hierdurch wird eine spielfreie Lagerung der Lagerschilde 7, 9 auf den Tragelementen 11, 13, 15, 17 mit einfachsten Mitteln geschaffen.

In den Figuren 6 und 7 ist das Tragelement 11 nach dem Ausschneiden aus einem Blechstück dargestellt, wonach dann in einem weiteren Arbeitsgang die Seitenschenkel 71, 73 um 90 Grad gegenüber der Bodenfläche 77 um die Biegelinien 129, 131 hochgebogen werden.

Um das Einstecken der Haltezungen 83, 85 in die Schlitze 95, 97, 99, 101 zu erleichtern, weisen die Zungenhälften 111, 113, 115, 117 von ihren freien Enden bis zu den Rastnasen 87, 89, 91, 93 in keilförmig verlaufende Außenseitenflächen 133, 135, 137, 139 auf.

Das Einfädeln eines Schraubendrehers in die rechteckförmige Aussparung 107, 109 in den Haltezungen 83, 85 wird durch Einfädelungsschrägen 141, 143, 145, 147 erleichtert, wodurch eine schnelle Rückformung der Zungenhälften 111, 113, 115, 117 nach derem Durchstecken durch die Schlitze 95, 97, 99, 101 ermöglicht wird. Darüber hinaus weisen die Tragelemente 11, 13, 15, 17 an ihren geschlossenen Enden der Aussparungen 107, 109 Sicherungszungen 149, 151 auf, welche vor dem Verbinden der Tragelemente 11, 13, 15, 17 mit den Lagerschilden 7, 9 aus den Aussparungen 107, 109 herausragen. In der Figur 8 ist die Sicherungszunge 149 dargestellt, deren freies Ende 153 parallel zu der Bodenfläche 77 des Tragelementes 11 verläuft. Die Sicherungszungen 149, 151 sind einstückig mit dem Tragelement 11 ausgebildet. Beim Hochbiegen der Seitenschenkel 71, 73 um 90 Grad gegenüber der Bodenfläche 77 des Tragelementes 11 werden die Sicherungszungen 149, 151 gleichzeitig mitgeformt.

Um die Lage der unter Zugspannung stehenden Rastnasen 87, 89, 91, 93 nach der Rückverformung der Haltezungen 83, 85 zu sichern, werden die Sicherungszungen 149, 151 in Pfeilrichtung 155 gemäß Figur 8 soweit unter plastischer Verformung an deren Einspannstelle 157 verschwenkt, bis das freie Ende 153 der Sicherungszunge 149 an den Innenschenkeln 159, 161 der Zungenhälften 111, 113 anliegt. Hierdurch wird eine Rückverformung der Haltezungen 83, 85 nach dem Verbinden der Tragelemente 11, 13, 15, 17 mit den Lagerschilden 7, 9 und damit ein Lösen der festen Verbindung sicher verhindert. Zum Lösen der Verbindung zwecks einer Reparatur des Elektromotors 1 muß die Sicherungszunge 149 aus der Aussparung 109 herausgeschwenkt und mit den Innenschenkeln 159, 161 der Zungenhälften 11, 113 außer Eingriff gebracht werden. Erst danach können die Haltezungen 83, 85 zur Freigabe der Lagerschilde 7, 9 unter plastischer Verformung verschwenkt werden.

Das Einschwenken der Sicherungszunge 149 in die Aussparung 109 wird durch Einfädelungsschrägen an den freien Enden der Sicherungszunge 149 und/oder durch Anfasungen 163, 165 an der oberen Seitenkante der Aussparung 109 erleichtert. Die Anphasung 165 braucht gemäß Figur 7 auch nur in einem Teilbereich angeordnet werden.

Das Einstecken der Haltezungen 83, 85 in die Schlitze 95, 97, 99, 101 in die Lagerschilde 7, 9 wird dadurch gewährleistet, daß die rechteckförmigen Schlitze 95, 97, 99, 101 an einer Längsseite 167, 169, 171, 173 Aussparungen 175, 177, 179, 181 zum Durchtreten der aus den Aussparungen 107, 109 herausgebogenen Sicherungszungen 149, 151 aufweisen.

## Patentansprüche

1. Elektromotor mit schraubenlosem Rahmenaufbau, bestehend aus einem Stator, einem darin umlaufenden Rotor und zwei zur Führung des Rotors dienenden metallischen Lagerschilden, die mittels sie axial verbindender metallischer Tragelemente zusammengehalten werden, **dadurch gekennzeichnet,** daß die als Abstandsprofile dienenden Tragelemente (11, 13, 15, 17) an ihren freien Enden Haltezungen (83, 85) mit Rastnasen (87, 89, 91, 93) aufweisen, welche durch Schlitze (95, 97, 99, 101) in den Lagerschilden (7) durchsteck- und mittels der Rastnasen (87, 89, 91, 93) an den Außenseiten (103, 105) der Lagerschilde (7, 9) unter Zugspannung verrast- und verriegelbar sind.

2. Elektromotor nach Anspruch 1, **dadurch gekennzeich net,** daß die Haltezungen (83, 85) mittig von ihren freien Enden ausgehende und bis in die Bodenfläche (77) des Tragelementes (11) reichende rechteckförmige Aussparung (107, 109) aufweisen, durch welche die beiden Zungenhälften (111, 113, 115, 117) beim Durchstecken durch die rechteckförmig ausgebildeten Schlitze (95, 97, 99, 101) in den Lagerschilden (7, 9) zur Achse der Abstandsprofile (11) in plastisch verform- und nach dem Durchstecken mittels eines Werkzeuges z. B. eines Schraubendrehers zum Verrasten der Rastnasen (87, 89, 91, 93) der Haltezungen (83, 85) hinter den Seitenkanten der Schlitze (95, 97, 99, 101) zurückverformbar sind.

3. Elektromotor nach Anspruch 2, **dadurch gekennzeichnet,** daß die Haltezungenhälften (111, 113, 115, 117) von ihren freien Enden bis zu den Rastnasen (87, 89, 91, 93) hin keilförmig verlaufende Außenseitenflächen (133, 135, 137, 139) aufweisen.

4. Elektromotor nach Anspruch 2 oder 3, **dadurch gekennzeichnet,** daß die rechteckförmigen Aussparungen (107, 109) in den Haltezungen (83, 85) an ihren offenen Enden Einfädelungsschrägen (141, 143, 145, 147) für den Schraubendreher aufweisen.

5. Elektromotor nach einem der vorhergehenden Ansprüche, **dadurch gekennzeichnet,** daß die Tragelemente (11, 13, 15, 17) mit den geschlossenen Enden der Aussparungen (107, 109) verbundene und aus diesen Aussparungen (107, 109) herausgeführte Sicherungszungen (149, 151) aufweisen, welche nach dem Verrasten der Rastnasen (87, 89, 91, 93) der Haltezungen (83, 85) hinter den Seitenkanten der Schlitze (95, 97, 99, 101) zum Sichern der Rastnasen (87, 89, 91, 93) in die Aussparungen (107, 109) mittels eines Werkzeuges einschwenkbar sind.

6. Elektromotor nach Anspruch 5, **dadurch gekennzeichnet,** daß die Sicherungszungen (149, 151) einstückig mit den Tragelementen (11, 13, 15, 17) ausgebildet sind.

7. Elektromotor nach Anspruch 6, **dadurch gekennzeichnet,** daß die freien Enden der Sicherungszungen (149, 151) Einfädelungsschrägen aufweisen.

8. Elektromotor nach Anspruch 6, **dadurch gekennzeichnet,** daß die Seitenkanten (159, 161) der Aussparungen (109) Anfasungen (163, 165) aufweisen.

9. Elektromotor nach einem der vorhergehenden Ansprüche, **dadurch gekennzeichnet,** daß die rechteckförmigen Schlitze (95, 97, 99, 101) in den Lagerschilden (7, 9) an einer Längsseite (167, 169, 171, 173) je eine Ausnehmung (175, 177, 179, 181) für die aus den Aussparungen (109) herausragenden Sicherungszungen (149, 151) beim Durchstecken der Haltezungen (83, 85) durch die Schlitze (95,97, 99, 101) aufweisen.
